# EUROPÄISCHE PATENTANMELDUNG

(11) **EP 0 849 900 A2**
(43) Veröffentlichungstag der Anmeldung: **24.06.1998**
(21) Anmeldenummer: 97114146.0
(22) Anmeldetag: 16.08.1997
(51) Int. Cl.: H04B 10/24

(54) **Übertragungs-Ring oder -Netz jeweils aus Lichtwellenleiter-Übertragungs-strecken**

(30) Priorität: 20.12.1996 DE 19653277
(71) Anmelder: ROBERT BOSCH GMBH, 70442 Stuttgart (DE)
(72) Erfinder: Kohn, Ulrich, 71522 Backnang (DE)

(57) **Zusammenfassung**

Übertragungs-Ring oder -Netz jeweils aus Lichtwellenleiter-Übertragungsstrecken, von denen wenigstens eine wahlweise in der einen oder anderen Richtung betreibbar ist, wenn es zur Erhöhung der Betriebssicherheit erforderlich ist.

Um die unerwünschte Ausbreitung von Licht entgegen der jeweiligen Übertragungsrichtung zu vermindern, ist in diese Lichtwellenleiter-Übertragungsstrecke ein optischer Isolator eingeschaltet, dessen Übertragungsrichtung umschaltbar ist.

## Beschreibung

### Stand der Technik

Die Erfindung geht von der Gattung aus, wie in dem unabhängigen Anspruch 1 angegeben.

Ein entsprechendes Netz ist beispielsweise beschrieben in der DE 43 18 732 A1; allerdings ist die vorliegnede Erfindung nicht auf die dort beschriebene Struktur eines "Verzweigungsnetzes" beschränkt, sondern auch bei beliebigen anderen Ring- oder Netzstrukturen anwendbar.

Wenn in einer solchen Struktur ein Netzabschnitt, also mindestens eine Lichtwellenleiter-Übertragungsstrecke ausfällt oder gestört ist, kann die Betriebssicherheit weiterhin dadurch gewährleistet werden, daß Streckenabschnitte umgeschaltet werden, um beeinträchtigte Teilnehmer des Ringes beziehungsweise Netzes über andere Übertragungswege zu erreichen oder zu versorgen. Dabei kann es vorkommen, daß eine Lichtwellenleiter-Übertragungsstrecke in einer anderen Übertragungsrichtung betrieben werden muß als im Normalbetrieb.

Dann kann es zu Störungen durch Reflexionen in dieser Lichtwellenleiter-Übertragungsstrecke kommen, oder - wenn ein optischer Isolator in dieser Lichtwellenleiter-Übertragungsstrecke vorgesehen ist - es wird erforderlich, den Isolator durch einen Überkreuzschalter umzupolen, das heißt, den Isolator mit vertauschtem Eingang und Ausgang in die Lichtwellenleiter-Übertragungsstrecke einzuschalten. Dieses wird insbesondere dann erforderlich, wenn in der Lichtwellenleiter-Übertragungsstrecke ein optischer Verstärker mit einem Isolator vorgesehen ist, denn optische Verstärker sind zwar an sich bidirektional, nicht aber optische Isolatoren (wenn diese bidirektional arbeiten würden, hätten sie ja keine Isolatorwirkung mehr!).

Unter den optischen Isolatoren gibt es polarisationsabhängig und polarisationsunabhängig arbeitende.

Ein polarisationsabhängiger Isolator ist beispielsweise beschrieben in "Optische Nachrichtentechnik", Teil II, 2. Auflage, von H. G. Unger, S. 530f. Allerdings muß man sich dort im allgemeinen als Vorschalteinrichtung noch einen Polarisator hinzudenken, da nicht immer davon ausgegangen werden kann, daß die Strahlungsquelle linear polarisierte Strahlung liefert. Als Magnet ist üblicherweise ein Permanentmagnet vorgesehen. Der Prinzipaufbau eines solchen Isolators ist auch in "Laser, Lichtverstärker oder - oszillatoren" von Dr. Dieter Röss, Akademische Verlagsgesellschaft Frankfurt/Main, 1966, S. 95 beschrieben.

Ein polarisationsunabhängiger Isolator ist beschrieben in IEEE Photonics Technology Letters, Vol. 1, No. 3, March 1989, Seiten 68 bis 70.

Ein polarisationsunabhängiger Isolator wird auch in einem bekannten optischen Überkreuzschalter verwendet, der in einem Prospekt der FDK Corporation unter der Bezeichnung "2x2 OPTICAL SWITCH YS-111A" beschrieben ist. Mit diesem optischen Schalter können zwei Eingänge jeweils auf zwei Ausgänge geschaltet werden, wobei sich die Zuordnung kreuzweise vertauscht, wenn die Richtung eines Magnetfeldes elektrisch geändert wird.

### Vorteile der Erfindung

Der Anmeldungsgegenstand mit den Merkmalen des Anspruchs 1 hat folgenden Vorteil:

Durch die Einschaltung des optischen Isolators, dessen Übertragungsrichtung umschaltbar ist, in die bidirektional betreibbare Lichtwellenleiter-Übertragungsstrecke kann die unerwünschte Ausbreitung von Licht entgegen der jeweiligen Übertragungsrichtung vermindert werden. Ein komplizierter und störanfälliger Überkreuzschalter, mit dem ein nicht in seiner Wirkungsrichtung umschaltbarer Isolator umgepolt werden kann, kann vermieden werden. Der Einsatz eines bidirektionalen optischen Verstärkers in der bidirektional betreibbaren Lichtwellenleiter-Übertragungsstrecke wird erleichtert.
Der Aufbau von Übertragungs-Ringen und -Netzen, in denen zur Erhöhung der Betriebssicherheit Reserve-Übertragungsstrecken und/oder bidirektional betreibbare Übertragungsstrecken vorgesehen sind, wird erleichtert.

Vorteilhafte Weiterbildungen sind in den abhängigen Ansprüchen angegeben, deren Merkmale auch, soweit sinnvoll, miteinander kombiniert werden können.

### Zeichnungen

Ausführungsbeispiele der Erfindung und ihrer Weiterbildungen sind in den Zeichnungen gezeigt und in der nachfolgenden Beschreibung näher erläutert. Es ist dargestellt in:
Figur 1: eine Prinzipdarstellung eines kombinierten Übertragungs-Netzes nach der Erfindung, das als Bestandteil auch einen Übertragungs-Ring nach der Erfindung ennthält und aus Lichtwellenleiter-Übertragungsstrecken zusammengesetzt ist,
Figur 2: ein Detail aus Figur 1,
Figur 3: eine Variante, die Figur 2 ersetzen kann,
Figur 4: ein Ausführungsbeispiel für einen polarisationsunabhängigen Isolator, der im Zusammenhang mit der Erfindung zum Einsatz kommen kann.

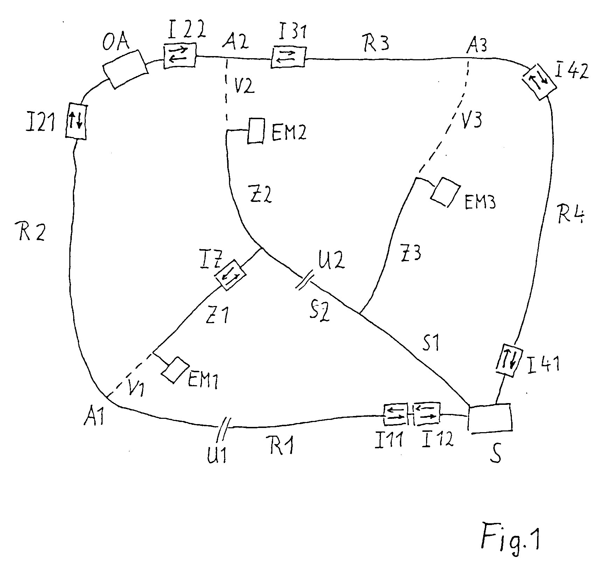

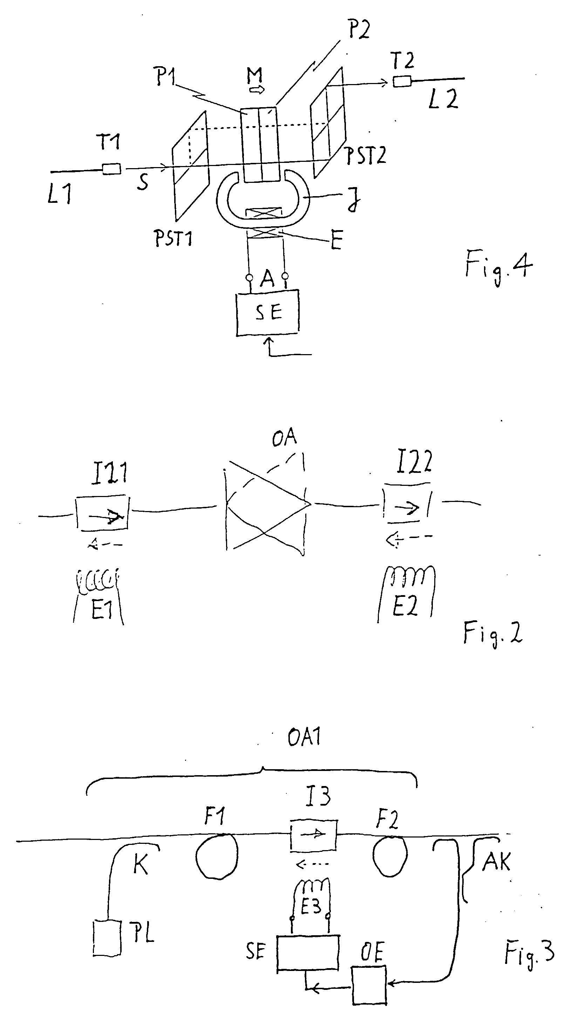

### Beschreibung des Ausführungsbeispiels nach Figur 1:

### Aufbau des bevorzugten Ausführungsbeispiels:

Figur 1 zeigt den prinzipiellen Aufbau eines komplexen Übertragungsnetzes, das einen Übertragungsring, ein Verteilnetz in Gestalt eines Verzweigungsnetzes und darin enthalten auch ein Baumnetz und ein Sternnetz zeigt. Dies verdeutlicht, daß die Erfindung unabhängig von der Struktur eines Übertragungsnetzes anwendbar ist.

Wird angenommen, daß außer einem Sender S nur ein Übertragungsring vorhanden ist, der aus Lichtwellenleiter-Übertragungsstrecken, nämlich den Ringabschnitten R1, R2, R3, R4 besteht, so kann die Erfindung dadurch realisiert werden, daß in eine der Lichtwellenleiter-Übertragungsstrecken R3 ein optischer Isolator I31 eingeschaltet ist, dessen Übertragungsrichtung umschaltbar ist. Wenn an den Ring über Verbindungsleitungen V1 bis V3 Empfänger EM1 bis EM3 angeschlossen sind, so kann mit der wählbaren Übertragungseinrichtung eines Isolators I31 in dem Ringabschnitt R3 bestimmt werden, über welche Ringabschnitte die Empfänger EM2 oder EM3 Signale vom Sender S erhalten.

Die Steuerungsmöglichkeiten innerhalb des Ringes lassen sich noch erweitern, wenn in jedem Ringabschnitt R1 bis R4 je ein Isolator I11, I21, I31, I41 mit umschaltbarer Übertragungsrichtung vorgesehen ist. Verläuft im Normalfall beispielsweise die Übertragungsrichtung im Uhrzeigersinn, so kann sie beim Auftreten einer Unterbrechung U1 im Ringabschnitt R1 durch Umschalten der Isolatoren I21, I31 und I41 umgekehrt werden. Dabei muß natürlich die Übertragungsrichtung der aus anderen Gründen noch vorhandenen Isolatoren I22 und I42 angepaßt werden.

Der Isolator I22 ergänzt einen optischen Verstärker, vorzugsweise einen Faserverstärker OA und kann ebenso wie der Isolator I21 Bestandteil des Verstärkers sein.

Auch in einem Übertragungsnetz, das beispielsweise aus dem Sender S, Stammleitungen S1 und S2, Zweigleitungen Z1 bis Z3 und den Empfängern EM1 bis EM3 besteht, kann die Einfügung eines umschaltbaren optischen Isolators IZ in eine Lichtwellenleiter-Übertragungsstrecke Z1 sinnvoll sein, wenn diese Lichtwellenleiter-Übertragungsstrecke wahlweise in beiden Richtungen betreibbar sein soll. Dies kann der Fall sein, wenn auch der Empfänger EM1 Signale aussendet (Rückkanal) oder wenn das Baumnetz für die Empfänger EM1 bis EM3 zur Erhöhung der Betriebssicherheit teilweise zu einem Ring ergänzt ist (durch den Ringabschnitt R1 und die Verbindungsleitung V1). Bei einer Unterbrechung U2 der Stammleitung S2 ist es dann möglich, den Empfänger EM1 über die Ringleitung R1 vom Sender S aus zu versorgen und über die Zweigleitung Z1 die Sendersignale auch zum Empfänger EM2 weiterzuleiten. Dazu wird man in der Verbindungsleitung V1 einen Schalter vorsehen, so daß diese Verbindungsleitung im Normalbetrieb unterbrochen ist, während der Schalter geschlossen wird, wenn es die Unterbrechung U2 erforderlich macht. Solche steuerbaren optischen Schalter vorzusehen, ist aus der DE 43 18 732 A1 bekannt.

Es ist aber auch möglich, steuerbare optische Schalter dadurch zu ersetzen, daß in einer Lichtwellenleiter-Übertragungsstrecke R1, R2 oder R4 zwei umschaltbare optische Isolatoren unmmittelbar oder mittelbar in Reihe geschaltet sind, denn wenn man die Übertragungsrichtung der beiden Isolatoren in der selben Lichtwellenleiter-Übertragungsstrecke gegensinnig steuert, ergibt sich die Wirkung eines optischen Schalters. So kann man also in dem gezeigten Beispiel einen oder mehrere der Ringabschnitte R1, R2, R4 sperren.

Die Anordnung von Isolatoren in Figur 1 ist nur beispielhaft. Insbesondere wenn das Netz aus allen in Figur 1 gezeigten Bestandteilen einschließlich der schaltbaren Verbindungsleitungen V1 bis V3 besteht, kann es zweckmäßig sein, weitere umschaltbare Isolatoren (zum Beispiel auch in Verbindungsleitungen) einzufügen. Außerdem können auch weitere optische Verstärker vorgesehen sein.

### Aufbau des Details nach Figur 2:

Zwischen zwei Isolatoren I21, I22, deren Wirkungsrichtung umschaltbar ist, wie anhand von Figur 1 erläutert, ist über Lichtwellenleiter ein bidirektionaler optischer Verstärker OA geschaltet. In Betracht kommt insbesondere ein Faserverstärker mit einer erbiumdotierten Faser, der in beiden Richtungen betrieben werden kann, ohne daß ein Umschalten erforderlich ist.

### Funktion des Details nach Figur 2:

Umgeschaltet werden müssen lediglich die Wirkungsrichtungen der Isolatoren über die angedeuteten Elektromagnete E1, E2. Auf diese Weise kann die gezeigte Anordnung wahlweise sowohl in der Übertragungsrichhtung entsprechend den durchgezeichneten Pfeilen als auch entsprechend den unterbrochenen Pfeilen betrieben werden.

### Aufbau des Details nach Figur 3:

Hier ist ein optischer Faserverstärker OA1 weniger schematisch als in Figur 2 gezeigt. Er besteht aus zwei geeignet dotierten Faserstücken F1, F2 mit zwischengeschaltetem Isolator I3, dessen Wirkungsrichtung umkehrbar ist. Über einen Koppler K wird Pumpstrahlung von einer Pumpstrahlungsquelle PL zugeführt.

Zur Steuerung des Elektromagneten E3 sind Steuermittel SE vorgesehen, mit deren Hilfe der Elektromagnet umgepolt werden kann. Den Steuermitteln SE ist ein optoelektrischer Wandler OE vorgeschaltet, dem optische Steuersignale von einer Auskoppeleinrichtung AK zugeführt werden.

### Funktion des Details nach Figur 3:

Wieder braucht zur Umkehr der Übertragungsrichtung und der Verstärkungsrichtung nur die Wirkungsrichtung des Isolators I3 umgeschaltet zu werden, da ein Faserverstärker in beiden Richtungen weitgehend unabhängig davon verstärkt, in welcher Richtung die Pumpstrahlung eingespeist wird.

Die Steuerung der Wirkungsrichtung des Isolators I3 durch die Steuermittel SE erfolgt mittelbar über optische Seuersignale, die von der Auskoppeleinnrichtung AK ausgekoppelt und zusammen mit den optischen Signalen übertragen werden, die als Nutzsignale durch den Verstärker OA3 laufen. Die Nutzsignale und die Steuersignale benutzen also eine gemeinsame Übertragungswegstrecke.

### Aufbau des umschaltbaren Isolators nach Figur 4:

Im Luftspalt eines weichmagnetischen Joches J eines Elektromagneten E liegt eine Platte P1 eines magnetooptischen Materials, die einen Faraday-Rotator bildet, und eine Halbwellenplatte P2, die magnetfeldunabhängig eine Drehung der Polarisationsebene von hindurchgeleitetem Licht um 45° bewirkt, und zwar unabhängig von der optischen Strahlungsrichtung, also beispielsweise immer im Uhrzeigersinn. Die Richtung des Magnetfeldes des Elektromagneten E ist mit dem Pfeil M angedeutet. Durch den Elektromagnet E wird nur beim Ein- und Umschalten Strom geleitet; für den darauffolgenden Betrieb genügt das remanente Magnetfeld. Die Richtung des Magnetfeldes ist umkehrbar durch Umpolen einer Gleichspannung, die an den Anschlüssen A des Elektromagneten liegt. Dazu sind Steuermittel SE vorgesehen.

An einem Tor T1 dieser gezeigten Einrichtung ist ein Lichtwellenleiter L1 und an einem Tor T2 ein Lichtwellenleiter L2 angeschlossen. Dem Faraday-Rotator ist eine Vor- und eine Nachschalteinrichtung in Gestalt eines polarisierenden Strahlteilers PST 1 beziehungsweise PST2 vor- beziehungsweise nachgeschaltet.

### Funktion des bevorzugten Ausführungsbeispiels:

Ein Strahl S aus dem Lichtwellenleiter L1 gelangt zunächst in den polarisierenden Strahlteiler PST 1 und wird dort in zwei unterschiedlich polarisierte Teilstrahlen aufgeteilt, deren Polarisationsebene in der magnetooptischen Platte P1 um 45° gedreht und in der Halbwellenplatte P2 wieder um 45° zurückgedreht wird. In dem polarisierenden Strahlteiler PST2 werden die Teilstrahlen wieder miteinander vereinigt und gelangen über das Tor T2 in den Lichtwellenleiter L2.

In umgekehrter Richtung kann sich das Licht nicht von T2 nach T1 ausbreiten. Zwar wird die Polarisationsebene in der Halbwellenplatte P2 wiederum um 45° gedreht, aber in der magnetooptischen Platte P1 nicht zurück, sondern weiter gedreht. Das hat zur Folge, daß die Teilstrahlen im Strahlteiler auf dessen untere Fläche gelenkt und dort reflektiert werden, so daß sie nicht in das Tor 1 gelangen können. Die Einrichtung nach Figur 4 wirkt demnach als optischer Isolator.

Erst nach Umkehr des Magnetfeldes mittels der Steuermittel SE kann ein Gegenstrahl vom Tor T2 zum Tor T1 gelangen, während dann der Weg von T1 nach T2 versperrt ist.

## Patentansprüche

1. Übertragungs-Ring oder -Netz jeweils aus Lichtwellenleiter-Übertragungsstrecken (R1, R2, R3, R4, S1, S2, Z1, Z2, Z3, V1, V2, V3), von denen wenigstens eine wahlweise in der einen oder anderen Richtung betreibbar ist, dadurch gekennzeichnet,
daß in diese Lichtwellenleiter-Übertragungsstrecke (R3) ein optischer Isolator (I31) eingeschaltet ist, dessen Übertragungsrichtung umschaltbar ist.

2. Übertragungs-Ring oder -Netz nach Anspruch 1, dadurch gekennzeichnet, daß der optische Isolator wenigstens zwei um 45° gegeneinander gedrehte Polarisationsfilter mit zwischengeschalteter Einrichtung zur nichtreziproken Drehung der Polarisationsebene aufweist.

3. Übertragungs-Ring oder -Netz nach Anspruch 1, dadurch gekennzeichnet, daß der Isolator polarisationsunabhängig ist.

4. Übertragungs-Ring oder -Netz nach Anspruch 3, dadurch gekennzeichnet, daß der Isolator wenigstens einen polarisationsabhängigen optischen Strahlteiler und eine Einrichtung zur nichtreziproken Drehung der Polarisationsebene sowie Mittel zur reziproken Änderung der Drehrichtung aufweist.

5. Übertragungs-Ring oder -Netz nach Anspruch 4, dadurch gekennzeichnet, daß der Isolator folgendes aufweist:
- magnetooptische Mittel (P1), die in einem Magnetfeld angeordnet sind und die unter dessen Einfluß die Polarisationsebene eines durchgeleiteten optischen Strahles (S) mit fortschreitender Strahlungsausbreitung drehen,
- eine Vor- und eine Nachschalteinrichtung (PST1, P2, PST2), die den magnetooptischen Mitteln (P1) vor- beziehungsweise nachgeschaltet sind und die Polarisationsebene des Strahles so beeinflussen, daß dieser trotz der Drehung seiner Polarisationsebene in den magnetooptischen Mitteln den Isolator passieren kann, während ein Gegenstrahl nicht durchgelassen wird,
und daß die Richtung (M) des Magnetfeldes mit Hilfe von Steuermitteln (SE) umkehrbar ist, so daß nach Umkehr des Magnetfeldes nur noch der Gegenstrahl passieren kann.

6. Übertragungs-Ring oder -Netz nach Anspruch 5, dadurch gekennzeichnet, daß die Steuermittel (SE) zum Umpolen eines Elektromagneten (E) vorgesehen sind, der das Magnetfeld erzeugt.

7. Übertragungs-Ring oder -Netz nach Anspruch 5 oder 6, dadurch gekennzeichnet, daß die Steuermittel (SE) mittelbar durch optische Steuersignale steuerbar sind.

8. Übertragungs-Ring oder -Netz nach Anspruch 7, dadurch gekennzeichnet, daß für die optischen Steuersignale und die optischen Signale eine gemeinsame Übertragungswegstrecke vorgesehen ist.

9. Übertragungs-Ring oder -Netz nach einem der vorangehenden Ansprüche, dadurch gekennzeichnet, daß zusätzlich ein bidirektionaler optischer Verstärker in die Lichtwellenleiter-Übertragungsstrecke eingeschaltet ist.

10. Übertragungs-Ring oder -Netz nach Anspruch 9, dadurch gekennzeichnet, daß der Isolator Teil des optischen Verstärkers ist.

11. Übertragungs-Ring oder -Netz nach einem der vorangehenden Ansprüche, dadurch gekennzeichnet, daß der Isolator Teil eines optischen Repeaters ist.

12. Übertragungs-Ring oder -Netz nach einem der vorangehenden Ansprüche, dadurch gekennzeichnet,
daß der Übertragungs-Ring einen optischen Sender und zwei optische Empfänger aufweist, die alle miteinander durch die Lichtwellenleiter-Übertragungsstrecken verbunden sind, und daß wenigstens in die Lichtwellenleiter-Übertragungsstrecke zwischen den beiden Empfänngern ein Isolator eingeschaltet ist, dessen Wirkungsrichtung umschaltbar ist.

13. Übertragungs-Ring oder -Netz nach einem der vorangehenden Ansprüche, dadurch gekennzeichnet, daß mindestens eine Lichtwellenleiter-Übertragungsstrecke für beide Richtungen sperrbar ist durch gegeneinander geschaltete Isolatoren, die in der Lichtwellenleiter-Übertragungsstrecke mittelbar oder unmittelbar in Reihe geschaltet sind.
